# EUROPEAN PATENT APPLICATION

(11) **EP 1 103 422 A2**
(43) Date of publication of application: **30.05.2001**
(21) Application number: 00124378.1
(22) Date of filing: 20.11.2000
(51) Int. Cl.: B60R 7/08

(54) **Case for eyeglasses**

(30) Priority: 25.11.1999 IT BO990639
(71) Applicant: Bettoni, Giovanni, 24062 Costa Volpino (Bergamo) (IT)
(72) Inventor: Bettoni, Giovanni, 24062 Costa Volpino (Bergamo) (IT)
(74) Representative: Modiano, Guido, Dr.-Ing.

(57) **Abstract**

A case (1) for eyeglasses, constituted by a half-shell (2) for containing the eyeglasses, with their temples folded, which has wall fixing members (3) in a central region thereof.

## Description

The present invention relates to a case for eyeglasses, used particularly to place the eyeglasses when they are not used temporarily.

It is known that one problem that is currently strongly felt when accessing private and public restrooms to wash and/or refresh oneself, as well as other places such as one's office, home, car, is placing one's eyeglasses on devices which are rigidly and/or rotatably applied to a wall.

The aim of the present invention is to provide a case for eyeglasses which solves the above-described problems, allowing to permanently define a region for resting eyeglasses so as to avoid losing them or damage of the lenses due to scratches.

Within this aim, an object of the present invention is to provide a case for eyeglasses which is simple, relatively easy to provide in practice, safe in use, effective in operation, and has a low cost.

This aim and these and other objects which will become better apparent hereinafter are achieved by a case for eyeglasses according to the present invention, which comprises a half-shell for containing the eyeglasses, with their temples folded, which has wall fixing members in a central region.

Further characteristics and advantages will become better apparent from the following detailed description of a preferred but not exclusive embodiment of a case for eyeglasses according to the present invention, illustrated only by way of non-limitative example in the accompanying drawings, wherein:

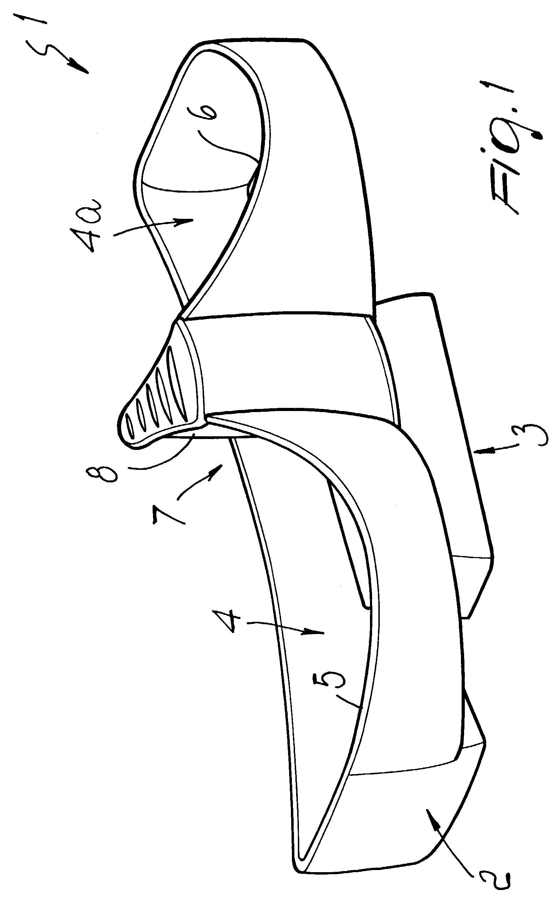

Figure 1 is a perspective view of a case for eyeglasses according to the present invention;

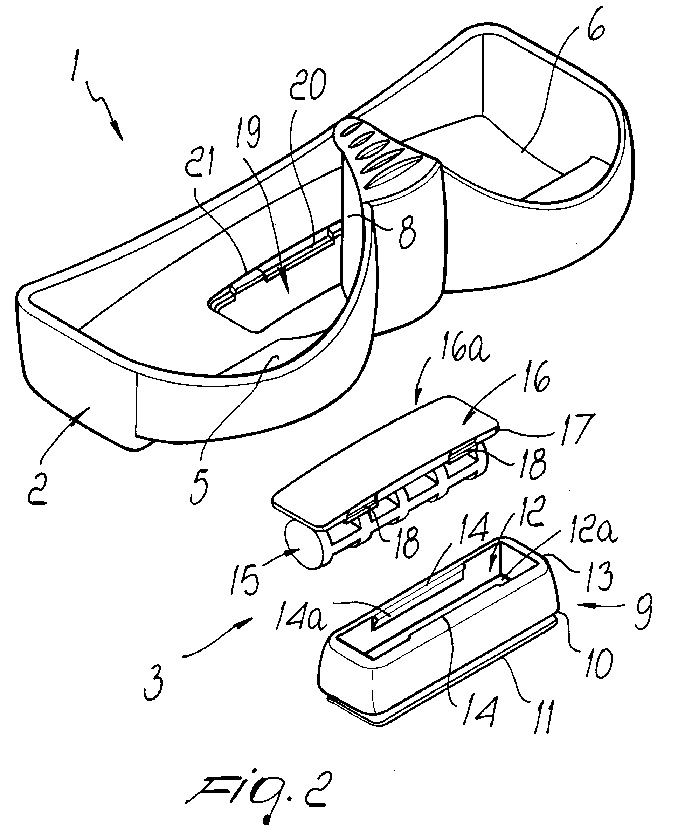

Figure 2 is an exploded perspective view of the case;

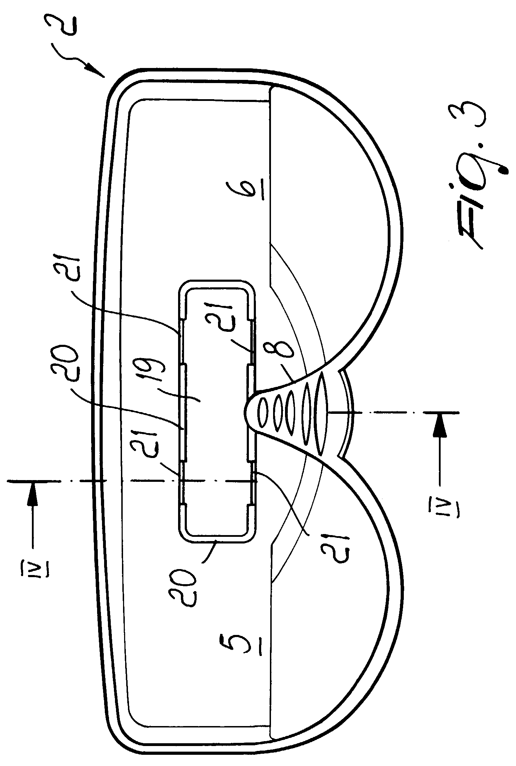

Figure 3 is a top view of the half-shell of the case inside which the eyeglasses are accommodated;

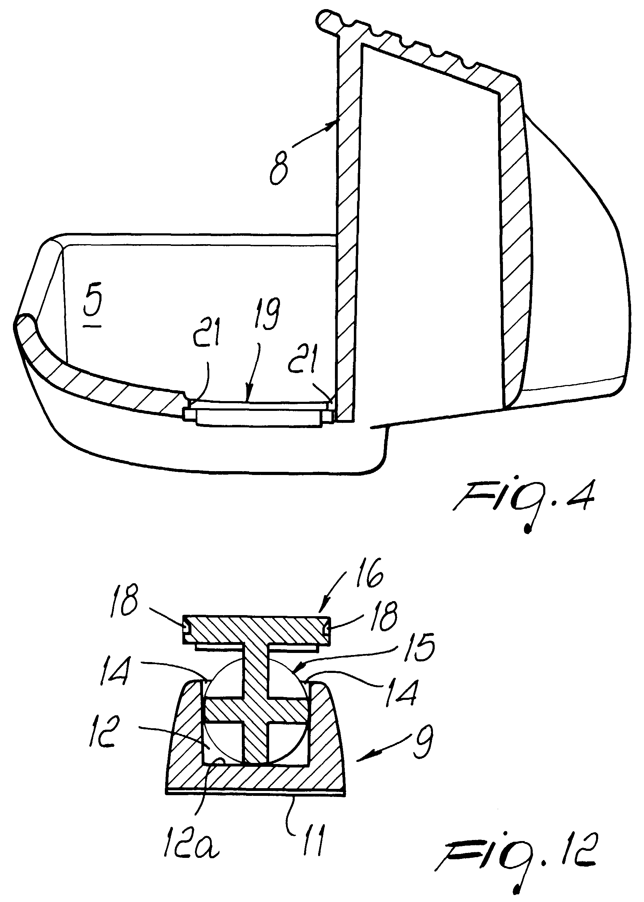

Figure 4 is a sectional view, taken along the line IV-IV of Figure 3;

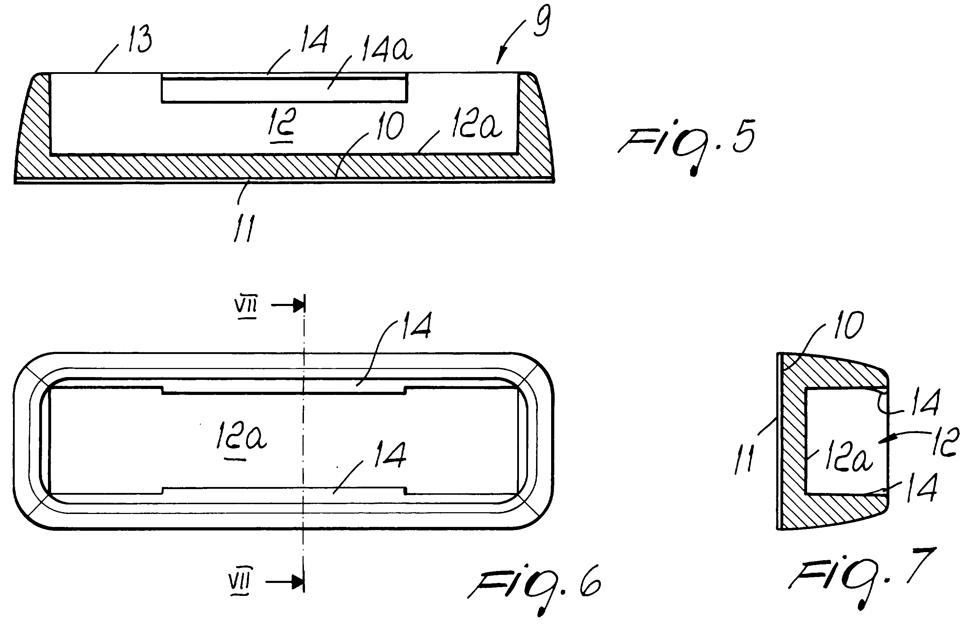

Figure 5 is a sectional view of one of the elements of the wall fixing members of the case;
Figure 6 is a top view of the element of Figure 5;

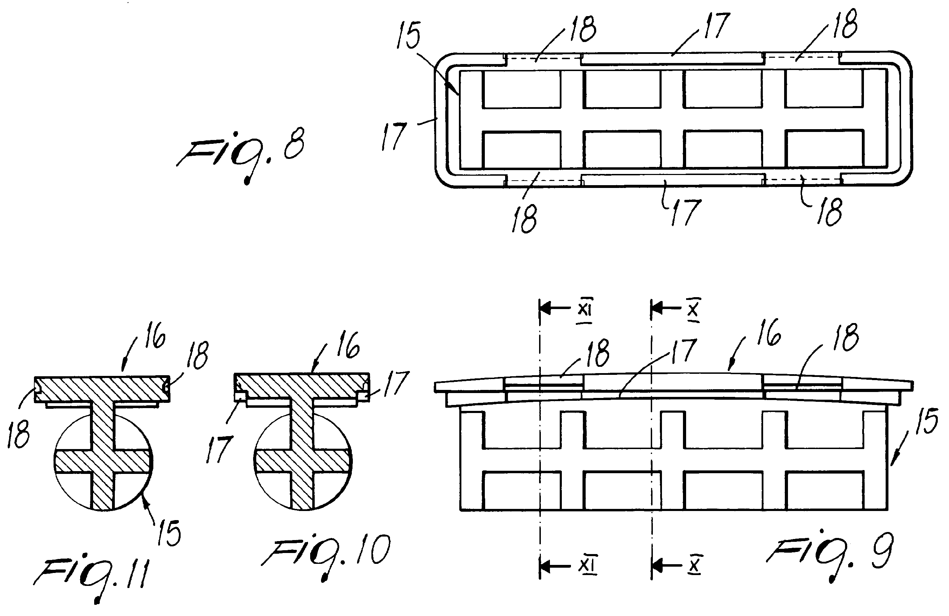

Figure 7 is a sectional view, taken along the line VII-VII of Figure 6;
Figure 8 is a bottom view of another element that constitutes the wall fixing member;
Figure 9 is a side view of Figure 8;
Figure 10 is a sectional view, taken along the line X-X of Figure 9;
Figure 11 is a sectional view, taken along the line XI-XI of Figure 9;
Figure 12 is a sectional view of the coupling of the elements of Figures 5 and 8, taken along a transverse line.

With particular reference to the figures, 1 generally designates a case for eyeglasses according to the invention.

The case 1 is constituted by a half-shell 2 and, in a central region, by fixing members 3 which can be applied to vertical, horizontal and oblique walls.

The half-shell 2 comprises, on lateral regions 4 and 4a, respective recesses 5 and 6 which accommodate the lenses of the eyeglasses, which are not shown in the accompanying drawings, and comprises, in a central region 7, a saddle 8 which receives and supports the nosepiece of the eyeglasses.

The fixing members 3 comprise a prism-shaped base 9 which has, on a face 10, an adhesive tape 11; an interlocking seat 12 is formed on the face that lies opposite the face 10.

The interlocking seat 12 has, at a central region of an edge 13, a pair of mutually facing teeth 14. The pair of teeth 14 forms, in the part that is directed toward a bottom 12a of the interlocking seat 12, a concave surface 14a so as to allow locking/release and rotation of a stem 15.

The stem 15 is cylindrical and rigidly supports a flat rectangular platform 16 which is provided, on its peripheral region 16a, with teeth 17 which are spaced, in a lateral central region, with hollows 18.

The platform 16 is coupled by interlocking with a seat 19 formed in the central region of the half-shell 2. The seat 19 is perimetrically provided with notches 20 and protrusions 21 which engage by interlocking the teeth 17 and the hollows 18, respectively.

In practical operation, the case 1 is assembled and fitted to a wall by passing the stem 15 through the seat 19 until the platform 16 couples by interlocking, by means of the teeth 17 and the hollows 18, with the respective notches 20 and protrusions 21. At this point, the stem 15 is connected by interlocking, by means of the pair of teeth 14, in the seat 12, inside which it can perform small rotations so as to allow to orientate the half-shell 2.

The case 1 thus obtained from the above-described assembly is fitted to a wall by fixing, by means of the adhesive tape 11, the base 9 to the wall, which can be flat, oblique or vertical.

From the above description it is thus evident that the invention thus conceived achieves the intended aim and objects; attention is called in particular to the fact that the connection mechanisms used allow the designer to adopt the most disparate shapes, thus also solving aesthetic problems linked to the production of cases for eyeglasses applied to walls.

The invention thus conceived is susceptible of numerous modifications and variations, all of which are within the scope of the inventive concept.

A second embodiment consists in the possibility to close the half-shell 2 with another complementary half-shell which is rotatably fixed on one of the sides of the half-shell 2.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. BO99A000639 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A case for eyeglasses, characterized in that it is constituted by a half-shell for containing the eyeglasses, with their temples folded, which has wall fixing members in a central region thereof.

2. The case according to claim 1, characterized in that said fixing members comprise: a prism-shaped base, which has adhesive tapes on one face, an interlocking seat on the other face, and is provided with teeth in a central region of its edge; a cylindrical stem, which is detachably engageable in said seat by means of said teeth; a platform, which is rigidly coupled to said stem and is peripherally provided with teeth which are spaced, in the lateral central region, by hollows; a substantially rectangular seat, which is formed in the central region of said case and is perimetrically provided with indented notches spaced in the lateral region by protrusions, said teeth and said indents being suitable to engage and interlock complementarily with said notches and said protrusions, respectively.

3. The case according to one or more of the preceding claims, characterized in that the surface of said teeth that is directed toward said seat is concave so as to facilitate the locking of said stem.

4. The case according to one or more of the preceding claims, characterized in that said stem can rotate in said seat in order to allow the orientation of said case.

5. The case according to claim 1, characterized in that said half-shell is constituted by two lateral regions which are shaped like recesses for the lenses of said eyeglasses and by a median region provided with a saddle which is adapted to receive, by resting thereon, the nosepiece of said eyeglasses.
